# EUROPEAN PATENT SPECIFICATION

(11) **EP 3 193 639 B1**
(45) Date of publication and mention of the grant of the patent: **04.12.2019**
(21) Application number: 15756651.4
(22) Date of filing: 28.08.2015
(51) Int. Cl.: A23L 33/10, A23L 29/00, A23L 33/00, C11B 3/00, C11B 5/00, A23D 9/007, A23D 9/013, A23D 9/04, A23L 33/12, A23L 33/15, C11B 3/12, C11B 7/00, C11C 3/08, A23L 33/105

(54) **GLYCERIDE COMPOSITION**
GLYZERIDZUSAMMENSETZUNG
COMPOSITION DE GLYCÉRIDE

(30) Priority: 02.09.2014 EP 14183279
(43) Date of publication of application: 26.07.2017
(73) Proprietor: Bunge Loders Croklaan B.V., 1521 AZ Wormerveer (NL)
(72) Inventor: 'T ZAND, Imro, 81100 Johor Bahru (MY); YAN, Youchan, 81700 Johor (MY)
(74) Representative: Potter Clarkson
(86) International application number: PCT/EP2015/069789
(87) International publication number: WO 2016/034517

(56) References cited:
- WO-A2-00/54575
- US-A1- 2010 178 369
- US-A1- 2012 219 647
- MING-LUNG CHEN ET AL: "Synthesis of the structured lipid 1,3-Dioleoyl-2-palmitoylglycerol from palm oil", JOURNAL OF THE AMERICAN OIL CHEMISTS' SOCIETY. (JAOCS) ED.2, SPRINGER, DE, vol. 81, no. 6, 1 January 2004 (2004-01-01), pages 525-532, XP002362796, ISSN: 0003-021X, DOI: 10.1007/S11746-006-0935-2

## Description

The present invention relates to a glyceride composition, an infant formula comprising the composition and a process for preparing the same.

Infant formula is an artificial substitute for human breast milk. Besides breast milk, infant formula is the only other infant milk which the medical community considers nutritionally acceptable for infants under the age of one year. Cows' milk is not recommended because it does not contain sufficient vitamin E, iron or essential fatty acids, which can make infants fed on cows' milk anaemic.

There are currently a variety of commercially available infant formulae, each one designed to meet the specific nutritional needs of a particular infant group. Infant formulae are commercially available as powders, ready-to-feed liquids, and liquid concentrates.

Triglyceride fats and oils are important commercial products and are used extensively in, for example, the food industry, particularly in infant formula. Some triglycerides are nutritionally important and the triglyceride 1,3-dioleoyl-2-palmitoyl glyceride (OPO) is known to be an important component of human milk fat.

Fat compositions containing the principal fatty acids found in human milk fat, in similar amounts to those found in human milk fat, may be derived from oils and fats of vegetable origin. However, a significant difference in composition arises because most glycerides of vegetable origin are unsaturated in the 2-position. In contrast, a substantial amount of palmitic acid occupies the 2-position of glycerides in human milk fat.

US 6,004,611 discloses a liquid oil composition consisting essentially of oils containing glycerides, wherein diglycerides make up the majority of the composition and are present in an amount of 40 to 90 % by weight and monoglycerides are present in an amount of less than 1.5 % by weight.

US 5,855,944 describes a fat composition comprising marine oil incorporating lecithin, ascorbyl palmitate and tocopherols as antioxidants, wherein the combined amount of antioxidants is between 1000 ppm and 4000 ppm. The Rancimat induction period (RIP) of the composition was found to be 10.1 hours when lecithin, ascorbyl palmitate and γ-tocopherol were added in a ratio of 750: 500: 1000 ppm respectively, whereas without the addition of antioxidants, the RIP was only 1.5 hours.

WO 00/54575 discloses a mixed triglyceride fat composition that is stabilised by the addition of phospholipids, wherein the RIP of the composition increased by 4 to 8 hours for every 1 % by weight of added lecithin.

US 5,102,659 describes an antioxidant blend comprising ascorbyl palmitate, tocopherol concentrate and a rosemary extract mixture that is said to be useful in prolonging the shelf life of food items and mineral supplements that are susceptible to rancidity.

WO 93/18669 discloses an oil blend containing soy oil and/or marine oil and an antioxidant system comprising about 400 to 1200 ppm of ascorbyl palmitate and about 6 to 20 ppm of beta carotene and at least 1000 ppm of citrate.

EP 0 404 058 describes a fat composition comprising fatty acids and an antioxidant mixture comprising tocopherol in a quantity of 150 to 300 ppm and/or ascorbyl palmitate in a quantity of 150 to 300 ppm and/or lecithin in a quantity of 500 to 2000 ppm.

EP 2 025 237 discloses a lipid composition comprising long chain polyunsaturated fatty acids and lecithin in a weight ratio of 75:25.

US 2012/219647 describes compositions comprising an edible oil and green tea extract or an active fraction of the green tea extract and more than 2% partial glycerides.

US 2010/0178369 discloses an antioxidant-stabilized composition containing at least one omega 3 polyunsaturated fatty acid.

Ming-Lung Chen et al (JAOCS, Vol. 81, no. 6 (2004)) describes the synthesis of the structured lipid 1, 3-Dioleoyl-2-palmitoylglycerol from palm oil.

There remains a need for fat compositions with, for example, increased or improved oxidative stability, that are suitable for use in infant formulas.

The subject matter of the invention is set out in the appended claims.

Lecithin typically includes a mixture of phospholipids, such as phosphatidylcholine, phosphatidylethanolamine, phosphatidylinositol and phosphatidic acid. Lecithin contributes to the oxidative stability of fats and oils, and also acts as an emulsifying agent within fat compositions.

The term "stability" as used herein preferably refers to oxidative stability. This can be measured using a rancimat value. The rancimat value can be determined using any of the tests known in the art. The rancimat values as referred to herein are measured using the AOCS Cd 12b-92 method with a testing temperature of 120°C.

Preferably the composition consists essentially, or consists, of the glyceride as defined herein and the one or more tocopherols and ascorbyl palmitate. Optionally, the composition also comprises a vegetable oil, such as sunflower oil. The composition does not comprise any antioxidant in addition to the one or more tocopherols and the ascorbyl palmitate, such as in the amounts defined herein.

Typically, in the invention the composition is a fat composition (i.e., a composition comprising a fat phase) and the composition may be in the form of a liquid or solid, such as a powder.

The content of triglyceride having a palmitoyl group at the 2- position in the composition is at least 15 % by weight, based on the weight of the composition. Preferably, the content of the triglyceride, for example OPO, is greater than 15% by weight. Typically, the triglyceride, such as OPO, is present in the composition in an amount of from 15 % by weight to 95 % by weight, such as from 20 % by weight to 90 % by weight, or from 30 % by weight to 75 % by weight.

In the invention the glyceride having a palmitoyl group at the 2-position is a triglyceride.

In an embodiment of the invention, the triglyceride having a palmitoyl group is 1,3-dioleoyl-2-palmitoyl glyceride (OPO).

In another embodiment, the triglyceride having a palmitoyl group is derived from a vegetable source, such as palm oil or a fraction thereof.

The triglyceride having a palmitoyl group at the 2- position may be produced, for example, by the reaction of palm oil stearin with oleic acid or an ester thereof in the presence of a lipase, such as described herein.

In the glyceride composition, which is a triglyceride composition, preferably at least about 40 % by weight of the total palmitic acid content of the composition is present at the 2-position in a glyceride in a composition, such as at least about 50 %, or at least about 55 %.

The percentage of palmitic acid residues in the 2- position is preferably determined by finding: (a) the total palmitic content of the fat by FAME (fatty acid methyl ester analysis) (surface internal standard C17:0); and (b) the palmitic content of the 2- position by FAME (same standard) of a sample of the fat after hydrolysis of the 1- and 3- residues using pancreatic lipase to form a 2-monoglyceride. The value is ((b) multiplied by 100) ÷ ((a) multiplied by 3).

The glyceride composition typically comprises glycerides other than those having a 2-palmitoyl group. The glyceride composition preferably comprises at least 95% by weight glycerides. The glycerides may include mono-, di- and tri- glycerides. Preferably, the composition comprises at least 90 %, more preferably at least 95 % by weight triglycerides. The glycerides typically comprise fatty acids other than palmitic acid, such as, for example, oleic acid.

The term "mixture" is not intended to limit the components of the mixture to be associated solely with each other in the composition and be identified as a separate component. The composition of the invention therefore encompasses an intimate or homogeneous blend of the glyceride, one or more tocopherols and ascorbyl palmitate as well as less well blended non-homogeneous blends.

The total or combined amount of the one or more tocopherols and ascorbyl palmitate present in the composition is up to 1 % by weight based on the weight of the composition. Preferably, the total amount of the one or more tocopherols and ascorbyl palmitate is from 0.001 % to 1 % by weight, such as from 0.005 % to 0.5 % by weight, preferably from 0.01 % to 0.1 % by weight.

The total or combined amount of the one or more tocopherols and ascorbyl palmitate in the composition is less than 10,000 ppm (i.e., 1 % by weight based on the weight of the composition), such as from 1 to 5,000 ppm (about 0.5 % by weight), or from 5 to 4,000, such as 10 to 3,000 ppm (about 0.3 % by weight). In one embodiment of the invention, the composition comprises about 10 to 500 ppm of the one or more tocopherols, such as about 50 to 400 ppm and about 10 to 500 ppm of the ascorbyl palmitate, such as about 100 to 400 ppm. A preferred amount of the one or more tocopherols is about 50 to 100 ppm.

Ascorbyl palmitate is an ester formed from ascorbic acid and palmitic acid. This can be obtained commercially as a powder. Preferably, the ascorbyl palmitate used in the mixture of the invention is in the form of a powder.

Tocopherols are a family of vitamin E compounds, which have a phenolic configuration, and are naturally found in vegetable oils, nuts, fish and leafy green vegetables. The term "tocopherols", as used herein, refers to a mixture comprising one or more of the alpha, beta, gamma and delta forms of the antioxidant, unless otherwise specified.

Preferably, the one or more tocopherols in the composition comprise two or more tocopherols, such as two, three, or four tocopherols. Preferred combinations include combinations of delta and gamma tocopherols.

The composition may further comprise a vegetable oil, such as, for example, sunflower oil. The amount of vegetable oil in the composition is typically less than or up to about 1,000 ppm (about 0.1 % by weight based on the weight of the composition), such as about 5 to 800 ppm, or 10 to 400 ppm. The weight ratio of the vegetable oil to the one or more tocopherols may be in the range from 5:1 to 1:5, such as 3:1 to 1:3. In one embodiment, the weight ratio of the vegetable oil to the one or more tocopherols is in the range of 2:1 to 1:2, such as about 1:1. The vegetable oil used in any of the embodiments herein has typically not been chemically modified, such as by reaction with glycerol and a lipase.

The one or more tocopherols may, preferably, be provided as a blend comprising about 50 % by weight of naturally occurring d-tocopherols and about 50 % by weight of sunflower oil, such as the composition sold as Tocoblend L50-IP (Vitablend B.V.).

There is also described a mixture, such as an antioxidant mixture, comprising one or more tocopherols, a vegetable oil and ascorbyl palmitate. The mixture does not comprise any additional or further antioxidant. The weight ratio of the one or more tocopherols to the ascorbyl palmitate in the mixture is preferably in the range of 10:1 to 1:2, such as from 5:1 to 1:2, or from 2.5:1 to 1:2, or from 1.5:1 to 1:1. The amount of vegetable oil in the mixture is generally less than about 80%, 70%, 60% or 50 % by weight, such as from about 5 to 45 % by weight, or 10 to 30 % by weight.

The vegetable oil is generally unmodified, such as by further chemical reaction and/or physical separation (such as by HPLC), and is preferably sunflower oil. The weight ratio of the one or more tocopherols to the oil may be as defined above.

The composition and the mixture does not include any further antioxidants such as, for example, phospholipids, citric acid or citrate, rosemary extracts, carotenoids and rosmarinic acid.

The composition or mixture may comprise tocopherols and ascorbyl palmitate in a weight ratio of 1:5 to 20:1, more preferably 1:3 to 10:1 and most preferably 1:2 to 3:1, such as 2.5:1 to 1:1, or 2:1 to 1.5:1.

The composition preferably comprises: at least 15 % by weight of OPO; and two or more tocopherols and ascorbyl palmitate and wherein the two or more tocopherols and ascorbyl palmitate are present in the composition in a total amount of 10 to 3000 ppm (i.e., 0.001 % by weight to 0.3 % by weight based on the weight of the composition), and the composition does not comprise any further antioxidant. The weight ratio of the one or more tocopherols to ascorbyl palmitate is preferably in the range of 3:1 to 1:2, for example, 2.5:1 to 1:2, such as about 1.5:1.

The composition may have a comparable, or increased, oxidative stability, with respect to the same composition additionally containing lecithin, preferably in an amount of up to about 500 ppm (about 0.05 % by weight), more preferably up to about 1000 ppm (about 0.1 % by weight).

The RIP of the composition may be at least about 20 %, 30 % or 40 %, more preferably at least about 50 %, longer than the RIP for the same composition which additionally contains lecithin, such as up to about 500 ppm of lecithin (about 0.05 % by weight). The RIP may be measured using the method described herein.

The composition may be more stable against oxidation compared to the same composition which does not contain any added antioxidants. Typically, the RIP of the composition is at least about 200 % longer, or 300% longer preferably at least about 400 % longer than the same composition without any added antioxidants.

The composition of the invention may have an RIP, such as measured by the method described above and herein, of greater than 22 hours, such as at least 28 hours, more preferably at least about 30 or 32 hours. For example, the RIP of the composition of the invention may be from about 25 hours to about 35 hours, such as from about 27 hours to about 32 hours, measured using the method described herein.

Surprisingly it has been found that the RIP of the present composition may be significantly longer than the same composition additionally containing small amounts, such as up to about 500 ppm (about 0.05 % by weight), of lecithin.

The composition of the invention may be for oral administration, suitably as part of an otherwise normal diet to mammals such as human infants (i.e., being from 0 to 4 years old). Preferably, the composition of the invention is suitable for use in infant formula.

The infant formula comprises a composition according to any of the embodiments defined herein, and wherein the formula does not comprise any further antioxidants.

The infant formula may further comprise one or more additional components selected from the group consisting of, milk fat, whey protein, carbohydrates, minerals, vitamins and mixtures thereof. For example, the milk fat may be derived from cows' milk and the formula may be in the form of a powder.

In the infant formula, the composition may be more stable against oxidation compared to the same composition additionally containing lecithin, such as up to about 500 ppm of lecithin.

The process for preparing a composition according to the invention comprises combining the glyceride with the one or more tocopherols and ascorbyl palmitate. The glyceride and the one or more tocopherols and ascorbyl palmitate may be as defined in any of the embodiments herein and may be combined by blending, such as mixing using means known in the art.

The components of the mixture and the composition may be as defined in any of the above embodiments.

The composition as defined herein may comprise a blend of:
(a) a triglyceride composition having a palmitoyl group at the 2-position wherein at least 40 % by weight of the total palmitic acid content of the composition is present as palmitoyl groups bonded at the 2- position of a triglyceride ; and
(b) a lecithin free antioxidant mixture comprising one or more tocopherols and ascorbyl palmitate.

The lecithin free antioxidant mixture comprising tocopherols and ascorbyl palmitate may provide the composition with an amount of less than or up to about 10,000 ppm (about 1 % by weight based on the weight of the composition), such as from 10 to 3,000 ppm of the components of the mixture i.e., tocopherols and ascorbyl palmitate. The triglyceride composition may be present in an amount of greater than 15 % by weight, such as at least 90 % or 95 % by weight.

There is also provided an infant formula comprising the glyceride composition defined herein and one or more tocopherols and ascorbyl palmitate. The infant formula does not comprise any further antioxidants.

The process for preparing an infant formula preferably comprises adding to the composition described above one or more additional components selected from the group consisting of, vegetable oil, milk fat, whey protein, carbohydrates, minerals, vitamins, and mixtures thereof.

The term "glyceride", as used herein, includes mono-, di- and tri- glycerides of fatty acids, and mixtures thereof, unless otherwise specified.

The glyceride used in the invention is preferably derived from vegetable sources, more preferably from palm oil. The glyceride is typically synthesised from palm oil or a fraction of palm oil. It will therefore be appreciated that the term "derived from vegetable sources" means that the glyceride is obtained directly or indirectly from vegetable sources and that the glyceride is not obtained directly or indirectly from animal products.

The term "fatty acid", as used herein, refers to saturated or unsaturated, straight chain carboxylic acids having from 6 to 24 carbon atoms, preferably from 12 to 22 carbon atoms. Unsaturated acids may comprise one, two, or more double bonds, preferably one or two double bonds.

Fatty acids are covalently bonded in glycerides. Thus, the fatty acid content of a glyceride composition includes the fatty acids present in mono-, di- and tri- glycerides. The total fatty acid content of a composition may be determined by FAME analysis.

Iodine value is determined by AOCS Cd 1d-92.

The term "vegetable oil", as used herein, includes sunflower oil, high oleic sunflower oil, palm kernel oil, rapeseed oil, flaxseed oil, soybean oil, safflower oil, coconut oil, and mixtures thereof.

A preferred product form for the composition of the invention is an infant formula.

The glyceride having a palmitoyl group is a triglyceride, more preferably being 1,3-dioleoyl-2-palmitoyl glyceride (OPO). The OPO content of the composition is preferably from 1 % to 90 % by weight, more preferably from 5 % to 75 % by weight, even more preferably from 10 % to 60 % by weight, such as from 10 % to 55 % by weight.

The composition comprising the glyceride having a palmitoyl group at the 2- position has at least 30 % by weight of the palmitic acid content of the composition present as palmitoyl groups bonded at the 2- position of a glyceride. A preferred range for the palmitic acid content of the composition present as palmitoyl groups bonded at the 2-position of a glyceride is from 40 % to 60 % by weight. The percentage of palmitic acid residues in the 2- position is preferably determined by finding: (a) the total palmitic content of the fat by FAME (fatty acid methyl ester) analysis (surface internal standard C17:0); and (b) the palmitic content of the 2- position by FAME analysis (same standard) of a sample of the fat after hydrolysis of the 1- and 3- residues using pancreatic lipase to form a 2-monoglyceride. The value is ((b) multiplied by 100) ÷ ((a) multiplied by 3).

In one aspect of the invention, at least 45 %, at least 50 %, at least 60 % or at least 70 % by weight of the palmitic acid content of the composition is present as palmitoyl groups bonded at the 2- position of a glyceride.

The triglyceride composition comprising OPO may be produced by a process comprising the reaction of palm oil stearin with oleic acid or an ester thereof in the presence of a lipase.

For example, the triglyceride composition comprising OPO may be produced by a process which comprises:
(i) providing a palm oil stearin comprising tripalmitoyl glyceride and having an iodine value of between about 2 and about 14;
(ii) optionally bleaching and deodorising the palm oil stearin;
(iii) subjecting the palm oil stearin to enzymatic transesterification with oleic acid or a non-glyceride ester thereof;
(iv) separating palmitic acid or palmitic non-glyceride esters from the product obtained in (iii); and
(v) optionally dry fractionating the product obtained in (iv) to form a fraction comprising an increased amount of OPO.

The palm oil stearin used in step (i) of the process may be obtained from solvent (wet) fractionation, Lanza fractionation, or dry fractionation of palm oil, such as multi-stage counter current dry fractionation of palm oil. The palm oil can be crude palm oil, refined palm oil, fractions of palm oil (e.g., obtained by dry fractionation), other derivatives of palm oil, or mixtures thereof. The palm oil stearin preferably has a palmitic acid content of at least 60 % by weight, more preferably at least 70 % by weight, such as at least 75 %, at least 80 % or at least 85 % by weight e.g., at least 90 % by weight, based on the total fatty acid residue content. The palm oil stearin used in step (i), preferably comprises 2-palmitoyl glycerides, typically in an amount of greater than 50 % by weight, such as greater than 55 % by weight or greater than 60 % by weight. The palm oil stearin preferably has an iodine value (IV) of between about 2 and about 14, preferably between about 4 and about 14, more preferably between about 6 and about 12, such as from about 8 to about 12. The palm oil stearin is optionally randomly interesterified before or after (ii).

The term "stearin", as used in this specification, includes a triglyceride mixture or fat blend from which at least 10 % by weight of the lower melting constituents have been removed by some kind of fractionation, e.g., dry fractionation or solvent fraction.

Before the palm oil stearin is subjected to enzymatic esterification, it is typically refined in optional step (ii), which preferably involves bleaching and deodorising. The bleaching of the palm oil stearin in the process is performed above 95 °C, more preferably above 100 °C (such as at from 105 °C to 120 °C). In the deodorising step, volatile impurities are removed from the palm oil stearin to yield deodorised palm oil stearin, typically at temperatures above 200 °C. The impurities removed in the deodorising step commonly include free fatty acids, aldehydes, ketones, alcohols and other hydrocarbon impurities. The bleaching and deodorising are performed under standard conditions known in the art and may be carried out in a single process step or two or more process steps. For example, the steps may be carried out at reduced pressures (e.g., 10 mm Hg or below), wherein the palm oil stearin is contacted with steam to help vaporise the impurities.

Bleaching and deodorising the palm oil stearin may help to improve the yield of the process.

The enzymatic transesterification according to the process is preferably carried out using a 1,3- specific lipase as a biocatalyst.

Under the influence of a 1,3- lipase, unsaturated fatty acid residues may be introduced into the 1- and 3- positions of the 2-palmitoyl glycerides by exchange with the fatty acid residues of other glycerides or more preferably by means of transesterification in the fatty mixture. Exchange preferably takes place between unsaturated free fatty acids, preferably oleic acid, or alkyl esters of oleic acid with alcohols. The term "alkyl", as used herein, includes straight chain or branched saturated hydrocarbons having from 1 to 12, more preferably 1 to 6, carbon atoms. The 2-palmitoyl glycerides modified in this way may be separated from the reaction mixture.

The enzymatic transesterification reaction selectively exchanges palmitic acid with oleic acid on the 1,3-position rather than the 2-position. The transesterification reaction is typically performed to reach, or approach, equilibrium at a conversion ratio of a minimum of at least 50 %, preferably at least 60 %, most preferably at least 70 %.

Preferably, in the transesterification reaction the palm oil stearin is, for example, mixed with an oleic acid concentrate (comprising free oleic acid at a concentration of greater than 65 % by weight, preferably greater than 70 % by weight, most preferably greater than 75 % by weight). Alternatively, the oleic acid may be provided as a mixture comprising oleic acid (preferably in an amount of greater than 65 % by weight), linoleic acid and, optionally, one or more other fatty acids. The ratio of palm oil stearin to oleic acid concentrate is preferably from 0.1 : 1 to 2 : 1, more preferably from 0.4 : 1 to 1.2 : 1, even more preferably from 0.4 : 1 to 1 : 1, most preferably from 1 : 1.1 to 1 : 2 on a weight basis. The reaction is preferably carried out at a temperature of from 30 °C to 90 °C, preferably from 50 °C to 80 °C, such as about 60 °C to 70 °C, and may be conducted batch-wise or in continuous fashion, with or without a water-immiscible organic solvent.

Before the enzyme transesterification reaction, the humidity is preferably controlled to a water activity between 0.05 and 0.55, preferably between 0.1 and 0.5, depending on the type of biocatalyst enzyme system used. The reaction may be performed, for example, at 60 °C in a stirred tank or in a packed bed reactor over biocatalysts, based on concentrates of Lipase D (*Rhizopus oryzae,* previously classified as *Rhizopus delemar,* from Amano Enzyme Inc., Japan) or immobilised concentrates of *Rhizomucor miehei* (Lipozyme RM IM from Novozymes A/S, Denmark).

In order to separate palmitic acid and other fatty acids, or palmitic non-glyceride esters and other glycerides, from OPO in (iv), the transesterified mixture (optionally after further treatment, such as isolation of the fat phase) is preferably distilled. Distillation is preferably carried out at low pressure (e.g., lower than 10 mbar) and elevated temperatures (e.g., greater than 200 °C) to remove the fatty acids from the product triglyceride fraction. It will be appreciated that the separation is not usually complete and that both the materials separated and the product that remains will be mixtures.

The composition obtained in (iv) is preferably fractionated in (v) to recover an olein fraction (i.e. a lower melting fraction). This can be done using solvent fractionation, Lanza fractionation or dry fractionation, using a single, two-step or multi-step fractionation technique, but is preferably carried out using single step dry fractionation. The olein can also be obtained by subjecting the transesterified mixture to multi-stage counter current dry fractionation.

Fractionation of the triglyceride fraction removes the unconverted tripalmitin (PPP) down to a level of less than 15 % by weight, preferably less than 10 % by weight, most preferably less than 8 % by weight. The olein fraction, obtained after step (v), is typically further refined or purified to remove remaining fatty acids and contaminants to produce a refined olein fraction.

The process may optionally comprise further steps before, between or after (i) to (v), such as partial purification or enrichment of the products in the desired component(s).

The process may comprise an additional step of further purifying the product in OPO.

The composition obtained after (iv) or (v) preferably comprises at least 10 % by weight OPO, more preferably at least 15 %, even more preferably at least 20 %, such as at least 25 % or 30 % or even 40 % by weight OPO based on total glycerides in the fraction. The balance typically comprises other non-OPO triglycerides, and may further contain minor amounts of diglycerides and monoglycerides. Minor amounts of free fatty acids may also be present. The fraction is preferably a composition which comprises a mixture of triglycerides wherein different fatty acid residues, including unsaturated fatty acid residues, are randomly distributed between the 1- and 3- positions and at least half of the fatty acid residues in the 2- positions are C16 and/or C18 saturated, preferably consisting substantially of palmitic acid residues, in particular 60-90 % by weight of the total 2-position fatty acids are preferably palmitic acid. Preferably, all of the fatty acid residues, or virtually all (e.g., greater than 99 % by weight), in the glycerides of the composition are even-numbered. The unsaturated fatty acid residues in the 1- and 3- positions preferably consist largely of oleic acid and linoleic acid. The compositions preferably includes at least as much (on a molar basis) of saturated fatty acid in the 2-position as in the 1- and 3-positions combined, more preferably up to twice as much (on a molar basis). Preferably, the 1,3-positions include both unsaturated C18 and saturated C4 to C14 fatty acids. The proportion and type of these fatty acids may be determined in accordance with dietary and physical requirements of the composition required.

The composition obtained after (iv) or (v) is preferably blended with at least one vegetable oil to provide the composition for use in the invention. Typically, the amount of vegetable oil is from 40-70 % by weight, based on the total weight of the composition. Examples of suitable vegetable oils include sunflower oil, high oleic sunflower oil, palm kernel oil, rapeseed oil, flaxseed oil, soy bean oil, and mixtures thereof.

An infant formula composition of the invention may comprise one or more components selected from other fats (i.e., lipids), proteins, carbohydrates, minerals and vitamins. The present invention also therefore contemplates an infant formula comprising milk fat, proteins and carbohydrates, for example in the approximate relative weight proportions of fat : protein : carbohydrate of from 4 : 1 : 9 to 6 : 3 : 15. Dry formulations containing this mixture, together with additional components customary in such formulations, may be dispersed in water to produce an emulsion of approximately 2 to 5g of fat per 100ml of dispersion. In a preferred embodiment, the milk fat is derived from cows' milk.

Alternatively, the composition may be in the form of a food product, food supplement or pharmaceutical product. The composition optionally comprises a complementary fat. For example, compositions in the form of food products may comprise a complementary fat selected from: cocoa butter, cocoa butter equivalents, palm oil or fractions thereof, palm kernel oil or fractions thereof, interesterified mixtures of said fats or fractions thereof, or liquid oils, selected from: sunflower oil, high oleic sunflower oil, soybean oil, rapeseed oil, cottonseed oil, fish oil, safflower oil, high oleic safflower oil, maize oil and MCT-oils. Food products (which term includes animal feed) contain a fat phase, wherein the fat phase contains the composition of the invention. The food products are suitably selected from the group consisting of: spreads, margarines, creams, dressings, mayonnaises, ice-creams, bakery products, infant food, chocolate, confectionery, sauces, coatings, cheese and soups. Food supplements or pharmaceutical products may be in the form of capsules or other forms, suitable for enteral or parenteral application and comprise a product of the invention.

The present invention also provides a process for preparing an infant formula comprising:
(a) dispersing a glyceride as defined in any of the embodiments herein in cows' milk (preferably full fat cows' milk); and
(b) to this dispersion adding a mixture as defined in any of the embodiments herein.

The process for preparing the infant formula may comprise one or more further steps in addition to (a) and (b).

The infant formula is typically prepared in the form of a ready-to-feed liquid, a liquid concentrate for dilution prior to consumption, or a powder that is reconstituted prior to consumption. The methods of preparation of such formulations are well known in the art. For example, the process may involve the initial formation of an aqueous slurry comprising the fat blend, antioxidant mixture and cows' milk, optionally with further carbohydrates, proteins, lipids, stabilizers or other formulation aids, vitamins, minerals, or combinations thereof. The slurry may be emulsified and/or pasteurised and/or homogenised. Various other solutions, mixtures, or other materials may be added to the resulting emulsion before, during, or after further processing. This emulsion can then be further diluted, heat-treated, and packaged to form a ready-to-feed or concentrated liquid, or it can be heat-treated and subsequently processed and packaged as a reconstitutable powder, e.g., spray dried, dry mixed or agglomerated.

Preferably, the mixture of the fat composition and cows' milk in (a) is homogenised.

In a preferred embodiment, the infant formula is in the form of a powder. Thus, the process preferably comprises removing water from the product obtained in (a) or (b). This can be achieved using any suitable technique known in the art. Preferably, the product obtained in (a) or (b) is spray-dried.

The listing or discussion of an apparently prior-published document in this specification should not necessarily be taken as an acknowledgement that the document is part of the state of the art or is common general knowledge.

The following non-limiting example illustrates the invention and does not limit its scope in any way. In the example and throughout this specification, all percentages, parts and ratios are by weight unless indicated otherwise.

### EXAMPLES

### Example 1

A composition is prepared comprising as a fat phase Betapol®55 (Loders Croklaan BV, Wormerveer, The Netherlands), being a fat composition containing greater than 15% of the triglyceride OPO and having around 55 % by weight of the palmitic acid content of the composition present as palmitoyl groups bonded at the 2-position, and an antioxidant mixture comprising tocopherols (Tocoblend L50 IP; 50% natural mixed tocopherol plus 50% sunflower oil), ascorbyl palmitate and/or lecithin (Ronoxan A) in varying quantities up to a combined amount of between 100 to 600 ppm. The Rancimat induction period (RIP) of the fat compositions was measured using an AOCS Cd 12b-92 method at 120 °C. As controls, the RIP was measured for fat compositions in the absence of antioxidants, with the addition of tocopherols only at 100 ppm and the addition of tocopherols, ascorbyl palmitate and lecithin in amounts of 300 ppm, 100 ppm and 100 ppm, respectively. Inventive composition Examples 4 to 7 were free of added lecithin and contained ascorbyl palmitate in a constant amount of 100 ppm whilst varying the content of tocopherols from 100 ppm to 500 ppm.

**Table 1**

| | Tocopherol mixture content (ppm) | Ascorbyl palmitate content (ppm) | Lecithin content (ppm) | RIP (h) |
|---|---|---|---|---|
| Example 1 | - | - | - | 7.4 |
| Example 2 | 100 | - | - | 14.5 |
| Example 3 | 300 | 100 | 500 | 22 |
| Example 4 | 100 | 100 | - | 28.2 |
| Example 5 | 300 | 100 | - | 32.4 |
| Example 6 | 400 | 100 | - | 31.1 |
| Example 7 | 500 | 100 | - | 30.8 |

In the above table, RIP refers to the Rancimat induction period of the fats. Ronoxan A comprising 25 % by weight ascorbyl palmitate, 5 % by weight of dl-α tocopherol and 70 % by weight lecithin was used as the source of lecithin.

### Results:

Without the addition of antioxidants, the RIP of the composition was 7.4 hours. Upon the addition of 100 ppm of tocopherols, the RIP was doubled to 14.5 hours. Control example 3 contained a mixture of all three antioxidants and gave an extended RIP, compared to the other controls, of 22 hours.

Inventive Examples 4 to 7 contained only tocopherols and ascorbyl palmitate as antioxidants. All inventive examples exhibited extended RIPs of greater than about 28 hours. Specifically, inventive Example 5 contained tocopherols and ascorbyl palmitate in amounts identical to control Example 3, which additionally included 500 ppm of a lecithin containing composition, and, surprisingly, the RIP of the composition in inventive Example 5 was 10 hours longer than control Example 3, totalling 32.4 hours.

It is surprising that the oxidative stability of the composition can be increased by removing lecithin since this is a known antioxidant.

## Claims

1. A glyceride composition comprising at least 15 % by weight of a triglyceride comprising a palmitoyl group at the 2-position, wherein at least 30 % by weight of the total palmitic acid content of the composition is present at the 2-position in a glyceride, wherein the composition comprises one or more tocopherols and ascorbyl palmitate in a total amount of up to 1 % by weight, and wherein the composition does not comprise any further antioxidant, such as phospholipids.

2. A composition according to Claim 1, wherein the triglyceride is 1,3-dioleoyl-2-palmitoylglycerol (OPO).

3. A composition according to Claim 1 or Claim 2, wherein the tocopherols are selected from the group consisting of alpha-tocopherol, beta-tocopherol, gamma-tocopherol and delta-tocopherol, and mixtures thereof.

4. A composition according to any one of Claims 1 to 3, wherein the composition comprises the one or more tocopherols and ascorbyl palmitate in a weight ratio of 1:5 to 20:1, more preferably 1:3 to 10:1 and most preferably 1:2 to 3:1, such as 2.5:1 to 1:1, or 2:1 to 1.5:1.

5. A composition according to any one of Claims 1 to 4, wherein the Rancimat induction period (RIP) of the composition is greater than 22 hours or 30 hours measured using the AOCS Cd 12b-92 method with a testing temperature of 120°C.

6. An infant formula comprising a composition according to any one of Claims 1 to 5, and wherein the formula does not comprise any further antioxidant.

7. An infant formula according to Claim 6, further comprising one or more additional components selected from the group consisting of, milk fat, whey protein, carbohydrates, minerals, vitamins and mixtures thereof.

8. An infant formula according to Claim 7, wherein the milk fat is derived from cows' milk.

9. A process for preparing a composition according to any one of Claims 1 to 5, which comprises combining the triglyceride with the one or more tocopherols and ascorbyl palmitate.

10. Use of a mixture comprising one or more tocopherols and ascorbyl palmitate to improve the oxidative stability of a glyceride composition comprising a triglyceride having a palmitoyl group at the 2-position, wherein at least 30 % by weight of the total palmitic acid content of the composition is present at the 2-position in a glyceride, and wherein the composition and mixture do not comprise any further antioxidant, such as phospholipids.

11. The use according to Claim 10, wherein the mixture is present in the composition in an amount of up to 1 % by weight.

## Patentansprüche

1. Glyceridzusammensetzung, umfassend mindestens 15 Gewichts-% eines Triglycerids, das eine Palmitoyl-Gruppe an der 2-Position aufweist, wobei mindestens 30 Gewichts-% des gesamten Palmitinsäuregehalts der Zusammensetzung an der 2-Position in einem Glycerid vorliegen, wobei die Zusammensetzung ein oder mehrere Tocopherol(e) und Ascorbylpalmitat in einer Gesamtmenge von bis zu 1 Gewichts-% umfasst und wobei die Zusammensetzung kein weiteres Antioxidans wie Phospholipide umfasst.

2. Zusammensetzung nach Anspruch 1, wobei das Triglycerid 1,3-Dioleoyl-2-palmitoylglycerol (OPO) ist.

3. Zusammensetzung nach Anspruch 1 oder Anspruch 2, wobei die Tocopherole aus der Gruppe bestehend aus alpha-Tocopherol, beta-Tocopherol, gamma-Tocopherol und delta-Tocopherol und Mischungen davon ausgewählt sind.

4. Zusammensetzung nach einem der Ansprüche 1 bis 3, wobei die Zusammensetzung das eine oder die mehreren Tocopherol(e) und Ascorbylpalmitat in einem Gewichtsverhältnis von 1:5 bis 20:1, bevorzugter 1:3 bis 10:1 und am meisten bevorzugt 1:2 bis 3:1, wie zum Beispiel 2,5:1 bis 1:1 oder 2:1 bis 1,5:1, umfasst.

5. Zusammensetzung nach einem der Ansprüche 1 bis 4, wobei die Rancimat-Induktionszeit (RIP) der Zusammensetzung größer als 22 Stunden oder 30 Stunden ist, die mit dem AOCS-Cd-12b-92-Verfahren mit einer Prüftemperatur von 120 °C gemessen wird.

6. Säuglingsnahrung, die eine Zusammensetzung nach einem der Ansprüche 1 bis 5 umfasst, und wobei die Nahrung kein weiteres Antioxidans umfasst.

7. Säuglingsnahrung nach Anspruch 6, die ferner eine oder mehrere zusätzliche Komponenten, ausgewählt aus der Gruppe bestehend aus Milchfett, Molkenprotein, Kohlenhydraten, Mineralstoffen, Vitaminen und Mischungen davon, umfasst.

8. Säuglingsnahrung nach Anspruch 7, wobei das Milchfett aus Kuhmilch gewonnen wird.

9. Verfahren zur Herstellung einer Zusammensetzung nach einem der Ansprüche 1 bis 5, das das Kombinieren des Triglycerids mit dem einen oder den mehreren Tocopherol(en) und Ascorbylpalmitat umfasst.

10. Verwendung einer Mischung aus einem oder mehreren Tocopherol(en) und Ascorbylpalmitat, um die oxidative Stabilität einer Glyceridzusammensetzung zu verbessern, die ein Triglycerid mit einer Palmitoyl-Gruppe an der 2-Position umfasst, wobei mindestens 30 Gewichts-% des gesamten Palmitinsäuregehalts der Zusammensetzung an der 2-Position in einem Glycerid vorliegen und wobei die Zusammensetzung und die Mischung kein weiteres Antioxidans wie Phospholipide umfassen.

11. Verwendung nach Anspruch 10, wobei die Mischung in der Zusammensetzung in einer Menge von bis zu 1 Gewichts-% vorliegt.

## Revendications

1. Composition glycéridique comprenant au moins 15 % en poids d'un triglycéride comprenant un groupe palmitoyle à la position 2, dans laquelle au moins 30 % en poids de la teneur totale en acide palmitique de la composition sont présents à la position 2 dans un glycéride, la composition comprenant un ou plusieurs tocophérols et du palmitate d'ascorbyle en une quantité totale allant jusqu'à 1 % en poids, et la composition ne comprenant aucun antioxydant supplément0061ire, tel que des phospholipides.

2. Composition selon la revendication 1, dans laquelle le triglycéride est le 1,3-dioléoyl-2-palmitoylglycérol (OPO).

3. Composition selon la revendication 1 ou 2, dans laquelle les tocophérols sont choisis dans le groupe constitué par l'alpha-tocophérol, le bêta-tocophérol, le gamma-tocophérol, le delta-tocophérol, et leurs mélanges.

4. Composition selon l'une quelconque des revendications 1 à 3, la composition comprenant un ou plusieurs tocophérols et du palmitate d'ascorbyle selon un rapport pondéral de 1:5 à 20:1, plus préférablement de 1:3 à 10:1 et idéalement de 1:2 à 3:1, tel que 2,5:1 à 1:1 ou 2:1 à 1,5:1.

5. Composition selon l'une quelconque des revendications 1 à 4, dans laquelle la période d'induction Rancimat (RIP) de la composition est supérieure à 22 heures ou 30 heures, mesurée au moyen de la méthode AOCS Cd 12b-92 avec une température d'essai de 120 °C.

6. Préparation pour nourrissons comprenant une composition selon l'une quelconque des revendications 1 à 5, et la préparation ne contenant pas d'antioxydant supplémentaire.

7. Préparation pour nourrissons selon la revendication 6, comprenant en outre un ou plusieurs composants supplémentaires choisis dans le groupe constitué par la matière grasse du lait, la protéine de lactosérum, les glucides, les minéraux, les vitamines et leurs mélanges.

8. Préparation pour nourrissons selon la revendication 7, dans laquelle la matière grasse du lait provient du lait de vache.

9. Procédé de préparation d'une composition selon l'une quelconque des revendications 1 à 5, consistant à combiner le triglycéride avec le ou les tocophérols et le palmitate d'ascorbyle.

10. Utilisation d'un mélange comprenant un ou plusieurs tocophérols et du palmitate d'ascorbyle pour améliorer la stabilité à l'oxydation d'une composition glycéridique comprenant un triglycéride ayant un groupe palmitoyle à la position 2, dans laquelle au moins 30 % en poids de la teneur totale en acide palmitique de la composition sont présents à la position 2 dans un glycéride, et dans laquelle la composition et le mélange ne contiennent aucun antioxydant supplémentaire, tel que des phospholipides.

11. Utilisation selon la revendication 10, dans laquelle le mélange est présent dans la composition en une quantité allant jusqu'à 1 % en poids.
